# FASCICULE DE BREVET EUROPEEN

(11) **EP 2 364 189 B1**
(45) Date de publication et mention de la délivrance du brevet: **13.03.2013**
(21) Numéro de dépôt: 09795465.5
(22) Date de dépôt: 19.11.2009
(51) Int. Cl.: A63F 13/12, A63F 13/00, G06K 9/20, G06K 9/32, A63H 30/00, G06K 9/64

(54) **JEU DE DRONES MUNIS DE BALISES DE RECONNAISSANCE**
DROHNENSATZ MIT ERKENNUNGSMARKERN
SET OF DRONES WITH RECOGNITION MARKERS

(30) Priorité: 04.12.2008 FR 0806800
(43) Date de publication de la demande: 14.09.2011
(73) Titulaire: Parrot, 75010 Paris (FR)
(72) Inventeur: JONCHERY, Claire, 75011 Paris (FR); DERBANNE, Thomas, 75018 Paris (FR); LEFEBURE, Martin, 92400 Courbevoie (FR)
(74) Mandataire: Dupuis-Latour, Dominique
(86) Numéro de dépôt international: PCT/FR2009/052218
(87) Numéro de publication internationale: WO 2010/063916

(56) Documents cités:
- FR-A- 2 912 318
- GB-A- 2 306 834
- JP-A- 2004 185 630
- JP-A- 2008 161 425
- US-B1- 6 453 055

## Description

La présente invention concerne un système de drones munis de balises de reconnaissance.

L'invention trouve une application particulièrement avantageuse dans le domaine des drones radiocommandés.

Un drone est un engin volant piloté à distance au moyen d'une radiocommande. Certains drones sont dits à voilure tournante, ce qui regroupe toutes les formules d'hélicoptères connues.

Il est connu de munir des jouets radiocommandés de générateurs de tirs virtuels afin, par exemple, de reproduire un combat. Dans ce cas, une évaluation de chaque tir virtuel généré par un jouet émetteur sur un jouet cible est nécessaire pour déterminer l'évolution du jeu.

A cet effet, il est également connu de munir ces jouets de caméras simulant un viseur associé au générateur de tirs virtuels. Ainsi, le tir virtuel d'un jouet émetteur est considéré comme ayant atteint un jouet cible si ce dernier est détecté sur une image fournie par la caméra du jouet émetteur lors du tir virtuel.

Pour détecter automatiquement une cible dans une image, il est possible d'utiliser un procédé de reconnaissance de formes et/ou de points caractéristiques du jouet cible.

Un tel procédé est décrit par exemple dans l'article de L. Younes "Invariance, déformations et reconnaissances de formes", publié dans Collection Mathématiques et Applications, Volume 44, Springer, 2004.

Le JP 2008-161425 A décrit un jouet comprenant de tels moyens de reconnaissance de forme pour identifier une cible dans une image acquise par une caméra.

Cette technique requiert toutefois des capacités de calcul importantes et peut être complexe à mettre en oeuvre dans le cas de certains drones de forme relativement simple et sobre. De ce fait, un tel détecteur de tirs virtuels ne peut pas être embarqué dans un drone sans entraîner un surcoût important pour ce dernier.

Un second procédé, décrit par exemple dans le FR 2 912 318 A1 (Parrot SA), utilise des diodes électroluminescentes agencées sur le drone afin de rendre plus simple la reconnaissance de ce dernier sur une image, grâce à des caractéristiques propres à ces diodes telles que leur fréquence de clignotement.

Mais la reconnaissance de la lumière issue d'une diode, qui se traduit en pratique par la reconnaissance d'une tache rouge entourée d'un halo blanc, est rendue difficile par les fortes variations de luminosité lorsque, par exemple, le drone change son degré d'exposition au soleil et/ou à une source de lumière artificielle. En effet, ces forts changements de luminosité génèrent des fausses reconnaissances des diodes de telle sorte que des tirs virtuels sont validés alors même qu'aucun drone cible n'était présent dans le viseur du drone émetteur.

Les US 6 453 055 B1 et JP 2004-185630 A décrivent un système de robots évoluant sur une aire de jeu, chaque robot étant identifié par une boule colorée ou une cocarde comportant des bandes parallèles de différentes couleurs, selon un codage de couleurs unique pour chacun des robots. Une caméra surplombant le terrain de jeu analyse l'image de la scène, identifie les robots par un système de reconnaissance de couleurs et en déduit la position de chacun sur l'aire de jeu.

Un système comparable de reconnaissance et de suivi d'objets mobiles est divulgué par le GB 2 306 834 A.

Cette technique est efficace dans le contexte considéré, à savoir une aire de jeu plane de dimensions et de forme prédéterminées, visualisée globalement par une caméra dont le champ embrasse la totalité de la surface de cette aire. Comme le fond est uniforme, il est relativement aisé d'y reconnaître les robots qui s'y trouvent, de manière à ensuite les identifier par l'analyse du motif coloré de chacun d'entre eux.

Mais dans le cas de drones évoluant en espace ouvert, que ce soit en pleine nature ou dans un intérieur, la très grande variété des images de fond susceptibles d'être captées par une caméra perturbe considérablement la reconnaissance des couleurs. Non seulement l'image comprend un arrière-plan d'intérieur ou d'extérieur incluant de multiples détails perturbateurs et des écarts de contraste très importants et variables, mais elle est très complexe et changeante sur le plan colorimétrique, tant en extérieur (arbres et pelouses, ciel, véhicules, bâtiments ou objets en arrière-plan, ...) qu'en intérieur (éclairages plus ou moins chauds, couleurs des meubles et des revêtements muraux et de sol, ...).

L'un des buts de l'invention est de proposer un système de reconnaissance de drones tel que ces derniers puissent être détectés avec une fiabilité élevée dans des images prises par leur caméra embarquée afin de valider des tirs virtuels émis entre eux, et ce dans des environnements très différents et contenant de multiples éléments susceptibles de perturber la reconnaissance.

L'invention propose un système divulgué par le FR 2 912 318 A précité, correspondant au préambule de la revendication 1. De façon caractéristique, il comporte en outre les éléments énoncés dans la partie caractérisante de la revendication 1.

Un système de drones munis d'une telle balise permet une validation des tirs aisée et simple dans une image vidéo tout en permettant d'assurer une grande fiabilité à cette validation. De fait, l'agencement d'une balise, recouverte de bandes de différentes couleurs, à un drone associe au drone un motif simplement et rapidement détectable. En outre, la disposition de deux bandes d'une première couleur encadrant une seconde bande, intermédiaire, d'une seconde couleur permet d'associer à un drone une alternance spécifique de bandes qui, en cas de détection, permet d'identifier le drone ainsi détecté.

Il est en particulier possible d'identifier de façon très fiable des drones évoluant en espace ouvert, tant en extérieur qu'en intérieur, malgré la très grande variété des détails perturbateurs présents dans les images de fond susceptibles d'être captées par la caméra.

Les sous-revendications 2 à 9 visent des formes de mise en oeuvre particulières, avantageuses, de l'invention.

On va maintenant décrire un exemple d'une mise en oeuvre de l'invention en référence aux figures ci-jointes sur lesquelles:
- la figure 1 représente un système de jeu de drones conformément à l'invention, et
- la figure 2 représente schématiquement un procédé de détection d'un drone muni d'une balise conformément à l'invention.

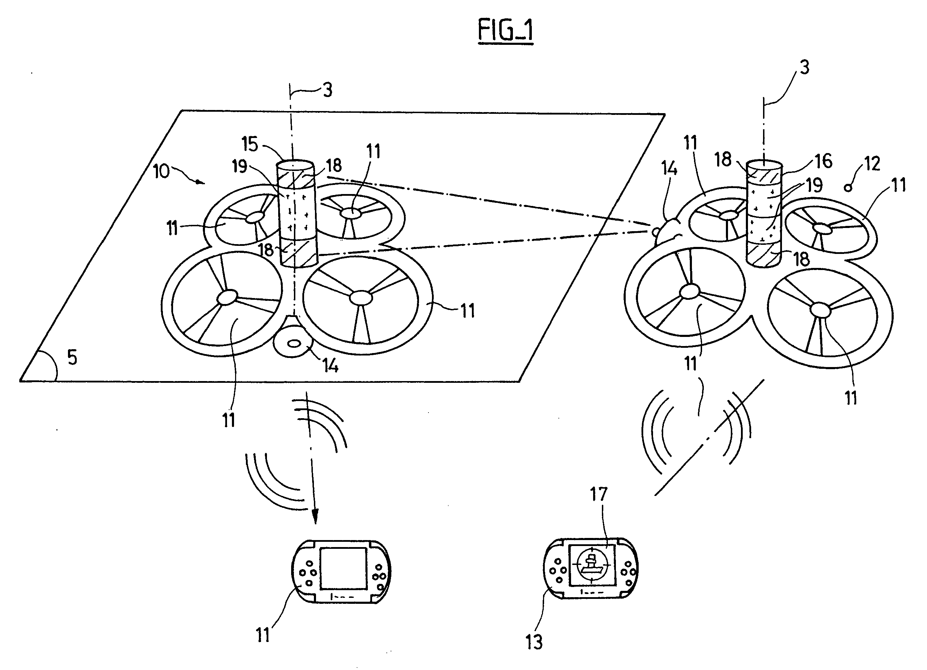

En référence à la figure 1, un système 1 conforme à l'invention comprend des drones 10 ou 12 (figure 1) typiquement formés par des engins volants de faibles dimensions. Dans cette réalisation préférée, ces drones 10 et 12 sont des "quadricoptères", c'est-à-dire des dispositifs à voilure tournante munis chacun de quatre rotors 11.

Chacun de ces drones 10 et 12 est muni d'une caméra 14 transmettant des images à des radiocommandes respectives 11 et 13 affichant ces images sur leurs écrans respectifs.

Grâce à ces écrans, leurs utilisateurs peuvent visualiser les déplacements de leurs drones et/ou déclencher un tir virtuel lorsqu'un drone cible semble être dans le viseur de leur drone émetteur, ce viseur étant simulé par la caméra 14.

Afin de vérifier qu'un tir virtuel d'un drone émetteur a eu lieu lorsqu'un drone cible était dans le viseur, il est nécessaire de déterminer automatiquement si le drone cible était présent sur l'image 17 affichée lors du tir. Pour cela et conformément à l'invention, les drones 10 et 12 sont munis d'une balise 15 ou 16 aisément détectables dans les images générées par les caméras 14.

Ces balises 15 et 16 ont par exemple une forme cylindrique présentant un axe 3 perpendiculaire à leur plan 5 principal. Ces balises 15 et 16 recouvertes par deux premières bandes 18 entourant au moins une seconde bande 19 d'une seconde couleur distincte de la couleur des premières bandes 18.

La première couleur des premières bandes 18 est typiquement une couleur chaude comme la couleur orange, le rayonnement d'une longueur d'onde de cette couleur étant compris entre 590 et 745 nm. Une telle couleur orange facilite la reconnaissance de la balise dans une image puisque cette couleur est relativement rare, notamment en milieu extérieur - urbain ou rural.

Par contraste, la seconde couleur de la seconde bande 19 est typiquement bleue (λ généralement compris entre 445 à 490 nm) ou verte (λ généralement compris entre 520 à 565 nm). La reconnaissance de la balise sur une image est alors favorisée par la présence d'au moins une double alternance de couleurs entre les premières bandes et la seconde bande. Ce contraste particulier de couleurs, caractéristique de l'invention, s'est révélé particulièrement rare dans les multiples environnements qu'il a été donné aux inventeurs de tester, qu'ils se situent en intérieur ou en extérieur. Ceci permet de rendre extrêmement fiable la reconnaissance des drones, malgré la complexité colorimétrique des images d'arrière-plan susceptible d'être captées par la caméra.

La reconnaissance de la balise 15 ou 16 requiert l'identification de cette double alternance sur une image.

Toutefois, lorsque plus de deux drones peuvent être pris pour cible par un drone émetteur, il est préférable d'utiliser une balise présentant au moins deux secondes bandes 19 et 19', comme représenté sur la balise 16. Dans ce cas, différentes alternances de couleur peuvent permettre d'identifier différents drones. Par exemple, en considérant un jeu à quatre drones, les balises associées à chaque drone peuvent présenter deux premières bandes orange tandis que les secondes bandes présentent, pour chaque drone, une combinaison propre de bandes bleues, vertes ou orange : bleu/bleu, vert/vert, vert/orange ou orange/vert (lorsqu'une seconde bande est orange, le dispositif considèrera la hauteur des bandes respectives).

Comme précédemment indiqué, la reconnaissance d'une couleur peut être rendue difficile par de fortes variations de luminosité. Afin de limiter l'impact des variations de luminosité, les bandes de couleurs mises en oeuvre dans cette réalisation de l'invention sont fluorescentes, ce qui assure d'une façon générale un niveau élevé de luminosité de la balise.

La reconnaissance d'un drone muni de balises conformes à l'invention est relativement aisée, de sorte que les drones peuvent embarquer les moyens nécessaires pour analyser les images fournies par la caméra 14. Pour effectuer la reconnaissance de la balise 15 dans l'image 17 prise lors d'un tir virtuel du drone émetteur 12 sur le drone cible 10, un procédé conforme à l'invention effectue premièrement une recherche de couleur orange sur cette image 17.

De fait, le principe de reconnaissance de la cible consiste à parcourir l'image à la recherche d'un premier pixel de la première couleur pouvant correspondre à l'image d'une des deux bandes 18 extrêmes de la balise Cette recherche peut s'effectuer en utilisant un codage des pixels de l'image 17 au moyen de signaux conformes au modèle YUV dans lequel l'espace colorimétrique est défini par trois composantes :
- une première composante Y représentant la luminance, et
- deux secondes composantes UV représentant la chrominance.

Les informations relatives à la chrominance suffisent à caractériser une couleur alors même que les informations relatives à la luminance varient beaucoup en fonction de l'illumination de la scène.

C'est pourquoi, la recherche d'une couleur sur une image ne s'effectue qu'avec des informations relatives à la chrominance des pixels, ce qui permet de réduire la quantité d'informations à traiter d'autant plus que le débit pour transmettre ces informations est quatre fois inférieur au débit requis pour transmettre les informations relatives à la luminance.

Ainsi la recherche de couleurs, définies comme des rectangles dans l'espace UV, est très rapide. La caractérisation des couleurs peut être effectuée à partir d'une base de données, générée à partir d'images de la cible sous différentes conditions de luminosité. Par exemple, dans une réalisation de l'invention, le vert est caractérisé par les valeurs suivantes dans les canaux de chrominance : 79<U<120 et 34<V<115 et l'orange par les valeurs : 65<U<146 et 159<V<252.

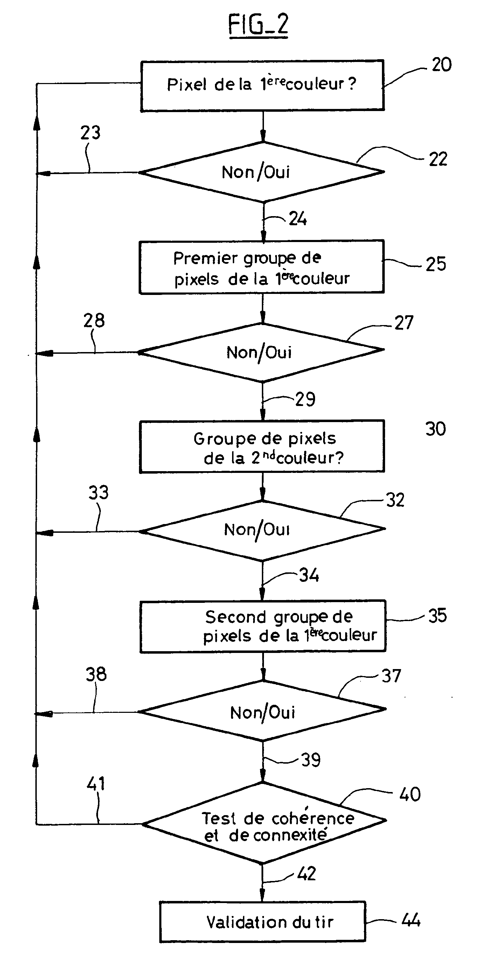

En référence à la figure 2, une première étape 20 représente l'état actif des moyens de reconnaissance qui analysent de façon constante chaque image 17 fournie afin de détecter un pixel orange dans cette image. Cette recherche peut être effectuée par un balayage en spirale de l'image. Si l'on joue avec plus de deux drones, il sera plus avantageux d'utiliser un balayage linéaire de l'image, du coin en haut à gauche au coin en bas à droite, afin de déterminer les hauteurs des bandes de couleurs, utiles pour distinguer les balises orange et vertes décrites précédemment.

En fonction du résultat 22 de cette recherche, le parcours en spirale de l'image est maintenu par une commande 23 en cas d'absence de reconnaissance d'un pixel orange.

Sinon, en cas de reconnaissance d'un pixel orange, la recherche 25 d'un premier groupe de pixels orange est commandé par un signal 24.

Cette recherche 25 d'un groupe de pixels orange est effectuée au voisinage du pixel orange initialement détecté.

En fonction du résultat 27 de cette recherche 25, un retour au balayage 20 en spirale de l'image peut être commandé par un signal 28 si aucun groupe de pixels orange n'est détecté.

Le cas échéant, un groupe de pixels orange a été détecté et une recherche 30 d'un second groupe de pixels est commandée par un signal 29. Plus précisément, le second groupe est recherché sur la base d'un critère de couleur correspondant à la deuxième couleur possible pour une bande intermédiaire 19 ou 19'.

En fonction du résultat 32 de cette recherche d'un groupe de pixels de la seconde couleur, un retour au balayage en spirale de l'image peut être commandé par un signal 33 en cas d'absence de tel second groupe de pixels.

Le cas échéant, la recherche 35 d'un éventuel second groupe de pixels orange est commandé par un signal 34.

En fonction du résultat 37 de cette recherche 34, un retour au balayage en spirale de l'image peut être commandé par un signal 38 si aucun second groupe de pixels orange n'est détecté.

Le cas échéant, un second groupe de pixels orange a été détecté et une vérification 40 de conditions de connexité et de cohérence des trois groupes de pixels détectés est commandée par un signal 39.

Plus précisément, ces conditions de connexité requièrent une connexité horizontale et une semi-connexité verticale des groupes de pixels. Ainsi, on autorise la présence d'une ligne de pixels n'appartenant à aucun groupe détecté entre ces différents groupes.

Cette semi-connexité s'explique par l'utilisation de rectangles de couleurs pour détecter les bandes de la balise. Ces rectangles pouvant dépasser la taille réelle de la bande affichée sur l'image et générer des lignes de jonction qui ne sont pas forcément connexes.

Par ailleurs, les conditions de cohérences visent à prendre en considération les variations de luminosité sous lesquelles des couleurs, telles que l'orange et le vert, peuvent significativement varier. Par exemple, une bande orange peut prendre des nuances de rose, rouge ou marron en fonction de son illumination.

C'est pourquoi les conditions de cohérences sont :
- une faible variation de la luminance moyenne entre les groupes de pixels (variation de la luminance entre deux groupes inférieure à 60 par exemple),
- une forte différence de chrominance entre les bandes de la première couleur et la bande intermédiaire de la seconde couleur dans le canal V (rouge) par exemple supérieur à un seuil (58 dans une réalisation),
- une faible différence de chrominance entre les deux bandes de la première couleur dans le canal U (bleu) (différence inférieure à 45 par exemple),
- une valeur de chrominance moyenne dans le canal V (rouge) minimale pour les deux premières bandes (supérieure à 167).

Lorsque le résultat 40 de cette vérification satisfait aux conditions de connexité et de cohérence, un signal 42 indique la validation 44 de la reconnaissance. Le cas échéant, un signal 41 entraîne le retour à un balayage de l'image par spirale.

De façon pratique, une réalisation de l'invention a été mise en oeuvre ave des caméras vidéo 14 utilisant une résolution d'image du type QCIF *(Quarter Common Intermediate Format),* chaque image étant constituée de 144 lignes de pixels ordonnés en 176 colonnes, et fonctionnant à un taux de 15 images par secondes.

Ainsi, les moyens embarqués de traitement de l'image ont un délai de l'ordre de 60 ms pour détecter la présence de la balise 15 sur une image, ce qui peut être réalisé avec des moyens relativement simples et de coûts réduits.

Afin d'assurer une reconnaissance fiable des balises, le seuil de sensibilité propre à chacune des bandes extrêmes 18 est de 1 pixel de chrominance, et 4 de luminance par image ce qui, compte tenu de ces moyens simples embarqués dans les drones, permet de détecter une balise ayant une hauteur de 7,5 cm et un diamètre de 5, 2 cm à une distance allant jusqu'à 2 mètres, avec des bandes ayant chacune une hauteur de 2,5 cm. La présente invention est susceptible de nombreuses variantes. Notamment, il est possible d'analyser une image 17 avec différentes approches, par exemple en traitant l'image par blocs de 8 pixels de telle sorte que l'image est analysée au fur et à mesure de son acquisition.

## Revendications

1. Système de jouets télécommandés munis de caméras, comprenant au moins un jouet émetteur (12) et au moins un drone cible (10),
ce système étant apte à permettre la validation d'un tir virtuel du jouet émetteur sur le drone cible par la reconnaissance de ce drone cible dans une image vidéo (17) fournie par la caméra (14) du jouet émetteur lors du tir virtuel, avec des moyens de reconnaissance comprenant des éléments agencés au drone cible (10), **caractérisé en ce que**:
- le jouet émetteur est un autre drone (12),
- les éléments de reconnaissance agencés au drone cible (10) comprennent une balise (15, 16) recouverte de deux premières bandes (18) d'une première couleur réfléchissant la lumière sur une première longueur d'onde, situées de part et d'autre d'au moins une seconde bande (19) d'une seconde couleur réfléchissant la lumière sur une seconde longueur d'onde, distincte de la première, et
- le spectre d'émission de la première couleur des deux premières bandes (18) est compris entre 590 nm et 745 nm tandis que le spectre d'émission de la seconde couleur de l'au moins seconde bande (19) est compris entre 445 et 565 nm.

2. Système selon la revendication 1 **caractérisé en ce que** la balise (15, 16) présente une forme cylindrique.

3. Système selon la revendication 2 **caractérisé en ce que** l'axe (3) de la balise cylindrique (15, 16) est perpendiculaire à un plan principal (5) du drone cible.

4. Système selon la revendication 3 **caractérisé en ce que** les premières et l'au moins seconde bandes (18, 19) s'étendent de façon circonférentielle sur la surface de la balise (15, 16) selon des plans coplanaires entre eux et perpendiculaires à l'axe (3) du cylindre.

5. Système selon l'une des revendications précédentes **caractérisé en ce que** la première couleur des deux premières bandes (18) est fluorescente.

6. Système selon l'une des revendications précédentes **caractérisé en ce que** la balise (16) présente au moins deux secondes bandes (19).

7. Système selon l'une des revendications précédentes **caractérisé en ce que** le drone émetteur (12) comprend des moyens pour analyser une image prise lors d'un tir virtuel en mettant en oeuvre les moyens suivants :
- des moyens pour détecter un premier pixel de la première couleur dans l'image,
- des moyens pour détecter un premier groupe de pixels de cette première couleur comprenant le pixel préalablement détecté,
- des moyens pour détecter un groupe de pixels de la seconde couleur, au voisinage du premier groupe de pixels de la première couleur,
- des moyens pour reconnaître un second groupe de pixels de la première couleur, et
- des moyens pour vérifier des conditions de reconnaissance et de cohérence entre des groupes de pixels détectés.

8. Système selon la revendication 7 **caractérisé en ce que** les moyens pour vérifier les conditions de reconnaissance et de cohérence des groupes de pixels comprennent au moins:
- des moyens pour vérifier une connexité horizontale des groupes de pixels, et
- des moyens pour vérifier une semi-connexité verticale des groupes de pixels, telle qu'une ligne de pixels n'appartenant à aucun groupe soit acceptée entre ces différents groupes.

9. Système selon la revendication 7 ou 8 **caractérisé en ce que** les moyens pour vérifier les conditions de reconnaissance et de cohérence des groupes de pixels comprennent au moins :
- des moyens pour analyser la variation de la luminance pour chaque groupe de pixels,
- des moyens pour analyser la différence de chrominance entre les premières bandes de la première couleur et la seconde bande de la seconde couleur dans un canal de codage de l'image V (rouge),
- des moyens pour analyser la différence de chrominance entre les deux premières bandes de la première couleur dans un canal de codage de l'image U (bleu), et
- des moyens pour analyser la chrominance minimale des deux premières bandes et de la (ou les)seconde(s) bande(s).

## Claims

1. System of remote-controlled toys provided with video cameras, comprising at least one emitter toy (12) and at least one target drone (10),
said system being operable to allow validation of a virtual shooting by the emitter toy to the target drone, by recognition of this target drone in a video image (17) provided by the video camera (14) of the emitter toy during the virtual shooting, with recognition means comprising elements arranged on the target drone (10), **characterized in that**:
- the emitter toy is another drone (12),
- the recognition elements arranged on the target drone (10) comprise a marker (15, 16) covered with two first strips (18) of a first color reflecting light at a first wavelength, located on either side of at least one second strip (19) of a second color reflecting light at a second wavelength, distinct from the first one, and
- the emission spectrum of the first color of the two first strips (18) is between 590 nm and 745 nm, whereas the emission spectrum of the second color of the at least one second strip (19) is between 445 and 565 nm.

2. System according to claim 1, **characterized in that** the marker (15, 16) is cylindrical in shape.

3. System according to claim 2, **characterized in that** the axis (3) of the cylindrical marker (15, 16) is perpendicular to a main plane (5) of the target drone.

4. System according to claim 3, **characterized in that** the first strips and the at least one second strip (18, 19) extends circumferentially over the surface of the marker (15, 16), according to planes that are coplanar to each other and perpendicular to the axis (3) of the cylinder.

5. System according to one of the preceding claims, **characterized in that** the first color of the two first strips (18) is fluorescent.

6. System according to one of the preceding claims, **characterized in that** the marker (16) has at least two second strips (19).

7. System according to one of the preceding claims, **characterized in that** the emitter drone (12) comprises means for analyzing an image taken during a virtual shooting, by implementing the following means:
- means for detecting a first pixel of the first color in the image,
- means for detecting a first group of pixels of this first color, comprising the previously detected pixel,
- means for detecting a group of pixels of the second color, in the vicinity of the first group of pixels of the first color,
- means for recognizing a second group of pixels of the first color, and
- means for verifying conditions of recognition and coherence between detected groups of pixels.

8. System according to claim 7, **characterized in that** the means for verifying the conditions of recognition and coherence of the pixel groups comprise at least:
- means for verifying a horizontal connectivity of the pixel groups, and
- means for verifying a vertical semi-connectivity of the pixel groups, such that a pixel line belonging to no group is accepted between these various groups.

9. System according to claim 7 or 8, **characterized in that** the means for verifying the conditions of recognition and coherence of the pixel groups comprise at least:
- means for analyzing the luminance variation for each pixel group,
- means for analyzing the chrominance difference between the first strips of the first color and the second strip of the second color in an image coding channel V (red),
- means for analyzing the chrominance difference between the two first strips of the first color in an image coding channel U (blue), and
- means for analyzing the minimal chrominance of the two first strips and of the second strip(s).

## Patentansprüche

1. System ferngesteuerter Spielzeuge, die mit Kameras versehen sind, das wenigstens ein Senderspielzeug (12) und wenigstens eine Zieldrohne (10) umfasst,
wobei dieses System dafür ausgelegt ist, die Validierung eines virtuellen Schusses von dem Senderspielzeug auf die Zieldrohne durch Wiedererkennen dieser Zieldrohne in einem von der Kamera (14) des Senderspielzeugs gelieferten Videobild (17) mit Erkennungsmitteln, die Elemente enthalten, die an der Zieldrohne (10) angeordnet sind, zu ermöglichen, wenn der virtuelle Schuss erfolgt, **dadurch gekennzeichnet, dass**:
- das Senderspielzeug eine weitere Drohne (12) ist,
- die an der Zieldrohne (10) angeordneten Erkennungselemente eine Bake (15, 16) enthalten, die von zwei ersten Bändern (18) einer ersten Farbe abgedeckt ist, die das Licht einer ersten Wellenlänge reflektiert, die sich beiderseits wenigstens eines zweiten Bandes (19) einer zweiten Farbe befinden, die das Licht einer von der ersten verschiedenen zweiten Wellenlänge reflektiert, und
- das Emissionsspektrum der ersten Farbe der zwei ersten Bänder (18) im Bereich von 590 nm bis 745 nm liegt, während das Emissionsspektrum der zweiten Farbe des wenigstens einen zweiten Bandes (19) im Bereich von 445 nm bis 565 nm liegt.

2. System nach Anspruch 1, **dadurch gekennzeichnet, dass** die Bake (15, 16) eine zylindrische Form aufweist.

3. System nach Anspruch 2, **dadurch gekennzeichnet, dass** die Achse (3) der zylindrischen Bake (15, 16) zu einer Hauptebene (5) der Zieldrohne senkrecht ist.

4. System nach Anspruch 3, **dadurch gekennzeichnet, dass** sich die ersten Bänder und das wenigstens eine zweite Band (18, 19) in Umfangsrichtung auf der Oberfläche der Bake (15, 16) in zueinander koplanaren und zu der Achse (3) des Zylinders senkrechten Ebenen erstrecken.

5. System nach einem der vorhergehenden Ansprüche, **dadurch gekennzeichnet, dass** die erste Farbe der zwei ersten Bänder (18) fluoreszierend ist.

6. System nach einem der vorhergehenden Ansprüche, **dadurch gekennzeichnet, dass** die Bake (16) wenigstens zwei zweite Bänder (19) aufweist.

7. System nach einem der vorhergehenden Ansprüche, **dadurch gekennzeichnet, dass** die Senderdrohne (12) Mittel umfasst, um ein Bild zu analysieren, das bei einem virtuellen Schuss aufgenommen wird, indem die folgenden Mittel betrieben werden:
- Mittel, um ein erstes Pixel der ersten Farbe in dem Bild zu detektieren,
- Mittel, um eine erste Gruppe von Pixeln dieser ersten Farbe, die das vorher detektierte Pixel enthält, zu detektieren,
- Mittel, um eine Gruppe von Pixeln der zweiten Farbe in der Umgebung der ersten Gruppe von Pixeln der ersten Farbe zu detektieren,
- Mittel, um eine zweite Gruppe von Pixeln der ersten Farbe zu erkennen, und
- Mittel, um die Erkennungs- und Kohärenzbedingungen zwischen den detektierten Gruppen von Pixeln zu verifizieren.

8. System nach Anspruch 7, **dadurch gekennzeichnet, dass** die Mittel zum Verifizieren der Erkennungs- und Kohärenzbedingungen der Gruppen von Pixeln wenigstens umfassen:
- Mittel, um einen horizontalen Zusammenhang der Gruppen von Pixeln zu verifizieren, und
- Mittel, um einen vertikalen Halbzusammenhang der Gruppen von Pixeln zu verifizieren, so dass eine Linie von Pixeln, die zu keiner Gruppe gehört, zwischen diesen verschiedenen Gruppen akzeptiert wird.

9. System nach Anspruch 7 oder 8, **dadurch gekennzeichnet, dass** die Mittel zum Verifizieren der Erkennungs- und Kohärenzbedingungen der Gruppen von Pixeln wenigstens umfassen:
- Mittel, um die Veränderung des Lichts für jede Gruppe von Pixeln zu analysieren,
- Mittel, um die Chrominanzdifferenz zwischen den ersten Bändern der ersten Farbe und dem zweiten Band der zweiten Farbe in einem Codierungskanal des Bildes V (rot) zu analysieren,
- Mittel, um die Chrominanzdifferenz zwischen den zwei ersten Bändern der ersten Farbe in einem Codierungskanal des Bildes U (blau) zu analysieren, und
- Mittel, um die minimale Chrominanz der zwei ersten Bänder und des einen oder der mehreren zweiten Bänder zu analysieren.
